(19) Europäisches Patentamt
European Patent Office
Office européen des brevets

(11) **EP 4 389 786 A1**

(12) **EUROPEAN PATENT APPLICATION**

(43) Date of publication:
**26.06.2024 Bulletin 2024/26**

(21) Application number: **22214927.0**

(22) Date of filing: **20.12.2022**

(51) International Patent Classification (IPC):
**C08F 210/06** (2006.01)        **C08L 23/14** (2006.01)
**C08J 5/18** (2006.01)          **B32B 27/08** (2006.01)

(52) Cooperative Patent Classification (CPC):
(C-Sets available)
**C08F 210/06; C08J 5/18; C08L 23/142;**
B32B 27/08; C08J 2323/14; C08J 2423/14    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Borealis AG
1020 Vienna (AT)**

(72) Inventors:
• **WANG, Jingbo
  4021 Linz (AT)**
• **GAHLEITNER, Markus
  4021 Linz (AT)**
• **FRIEDRICH, Karlheinz
  2320 Schwechat (AT)**
• **LESKINEN, Pauli
  06101 Porvoo (FI)**

(74) Representative: **Kador & Partner Part mbB
Corneliusstraße 15
80469 München (DE)**

(54) **HETEROPHASIC POLYPROPYLENE COMPOSITION**

(57)    The present invention relates to a heterophasic polypropylene composition having excellent stiffness and impact properties at medium to high flowability. In particular, the present invention relates to a heterophasic polypropylene composition comprising a propylene butene copolymer and a propylene ethylene elastomer. The heterophasic polypropylene composition is prepared using a Ziegler-Natta catalyst. Furthermore, the present invention also relates to a preparation process for the heterophasic polypropylene composition, and to articles comprising the heterophasic polypropylene composition as well as to use of the heterophasic polypropylene composition for the manufacture of articles.

EP 4 389 786 A1

(52) Cooperative Patent Classification (CPC): (Cont.)

C-Sets
**C08F 210/06, C08F 2/001;**
**C08F 210/06, C08F 4/6465;**
**C08F 210/06, C08F 4/6492;**
**C08F 210/06, C08F 4/6546;**
**C08L 23/142, C08L 23/0815;**
C08F 210/06, C08F 210/08, C08F 2500/35,
C08F 2500/12, C08F 2500/27;
C08F 210/06, C08F 210/16, C08F 210/08,
C08F 2500/35, C08F 2500/12, C08F 2500/27,
C08F 2500/33, C08F 2500/31, C08F 2500/25,
C08F 2500/17, C08F 2500/30

## Description

The present invention relates to a heterophasic polypropylene composition having excellent stiffness and impact properties at medium to high flowability. In particular, the present invention relates to a heterophasic polypropylene composition comprising a propylene butene copolymer and a propylene ethylene elastomer. The heterophasic polypropylene composition is prepared using a Ziegler-Natta catalyst. Furthermore, the present invention also relates to a preparation process for the heterophasic polypropylene composition, and to articles comprising the heterophasic polypropylene composition as well as to use of the heterophasic polypropylene composition for the manufacture of articles.

## Background

Polypropylene is widely used in film and molding applications, including caps & closure, thin-wall packaging, houseware and similar applications. In these applications, high stiffness and good impact strength is required.

Heterophasic propylene copolymers are often used in such packaging applications due to their good balance of properties. Typically, these are copolymers of propylene and ethylene. However, heterophasic propylene polymers with further monomers are also known in packaging applications. For example, EP-A-3126411 describes a heterophasic propylene copolymer comprising a matrix being a propylene - $C_4$ to $C_{12}$ alpha-olefin and a propylene ethylene elastomer as the dispersed phase. This heterophasic propylene polymer is prepared using a single-site solid particulate catalyst. Although some of the exemplified polymers have an acceptable impact strength, other mechanical properties thereof such as stiffness may require further improvement.

In order to fulfill the different requirements on packaging applications, balance of mechanical properties in terms of stiffness and impact strength is required. Polymers with higher stiffness may allow for the use of lower film thickness, leading to both material and energy savings. Good impact behavior is also essential so that the contents of the packaging remain safely contained, even if dropped.

## Object of the invention

It is thus an object of the present invention to provide new polypropylene compositions, which can offer improved balance of stiffness and impact strength. In particular, polypropylene compositions for application in the packaging field, such as molded articles or films, are desired. Further, polypropylene compositions which can offer these properties with a minimum number of components are highly desirable, as less complex polymer compositions can easily be subjected to recycling processes.

## Summary of the invention

It has been surprisingly found that the above-described object can be achieved by a heterophasic polypropylene composition comprising:

a) 55 to 90 wt.-%, based on the total weight of the heterophasic polypropylene composition, of a propylene copolymer (A) of propylene with 1-butene comonomer units in a content in the range of from 1.0 to 10.0 wt.-% and optionally with ethylene comonomer units in a content in the range of from 0 to 6.0 wt.-%, having a melt flow rate $MFR_2$ (230 °C), determined according to ISO1133, in the range of from 30 to 400 g/10 min; and

b) 10 to 45 wt.-%, based on the total weight of the heterophasic polypropylene composition, of a propylene ethylene elastomer (B) having an ethylene content in the range of from 20 to 60 wt.-%, and optionally comprising 1-butene comonomer units, and having an intrinsic viscosity IV, determined according to ISO1628-1 & 3, in the range of from 2.0 to 5.0 dl/g; and

wherein the heterophasic polypropylene composition has a melt flow rate $MFR_2$ (230 °C), determined according to ISO1133, in the range of from 10 to 100 g/10 min, and a melting temperature $T_m$, determined according to differential scanning calorimetry (DSC) described herein, in the range of from 150 to 167 °C, wherein the heterophasic polypropylene composition is obtained by a polymerization process using a Ziegler-Natta catalyst.

It has also been found that the above-described object can be achieved by a heterophasic polypropylene composition comprising:

a) 55 to 90 wt.-%, based on the total weight of the heterophasic polypropylene composition and determined at 25 °C according to ISO16152, of a xylene insoluble fraction (XI) comprising a propylene copolymer (A) of propylene with 1-butene comonomer units in a content in the range of from 1.0 to 10.0 wt.-% and optionally with ethylene comonomer units in a content in the range of from 0 to 6.0 wt.-%, the xylene insoluble fraction (XI) having a melt flow rate $MFR_2$ (230 °C), determined according to ISO1133, in the range of from 30 to 400 g/10 min; and

b) 10 to 45 wt.-%, based on the total weight of the heterophasic polypropylene composition and determined at 25 °C according to ISO16152, of a xylene soluble fraction (XS) comprising a propylene ethylene elastomer (B) having an ethylene content in the range of from 20 to 60 wt.-%, and optionally comprising 1-butene comonomer units, and the xylene soluble fraction (XS) having an intrinsic viscosity IV, determined according to ISO 1628-1 & 3, in the range of from 2.0 to 5.0 dl/g; and

wherein the heterophasic polypropylene composition has a melt flow rate $MFR_2$ (230 °C), determined according to ISO1133, in the range of from 10 to 100 g/10 min, and a melting temperature $T_m$, determined according to differential scanning calorimetry (DSC) described herein, in the range of from 150 to 167 °C, wherein the heterophasic polypropylene composition is obtained by a polymerization process using a Ziegler-Natta catalyst.

Further, it has been found that the above-described object is achieved by a process for the preparation of a heterophasic polypropylene composition by a multi-stage polymerization process, comprising

a) preparing a first propylene polymer fraction (A1) being a propylene homopolymer or a propylene copolymer of propylene with 1-butene comonomer units and/or ethylene comonomer units in a bulk phase reactor, preferably a loop reactor, in a first polymerization stage in the presence of a Ziegler-Natta catalyst;

b) transferring the first propylene polymer fraction (A1) to a second polymerization stage, and preparing a second propylene polymer fraction (A2) being a propylene copolymer of propylene with 1-butene comonomer units and optionally ethylene comonomer units in the presence of a Ziegler-Natta catalyst in a first gas phase reactor (GPR1); and

wherein the first propylene polymer fraction (A1) and the second propylene polymer fraction (A2) together form a propylene copolymer (A) of propylene with 1-butene comonomer units in a content in the range of from 1.0 to 10.0 wt.-% and optionally ethylene comonomer units in a content in the range of from 0 to 6.0 wt.-%, having a melt flow rate $MFR_2$ (230 °C), determined according to ISO1133, in the range of from 30 to 400 g/10 min;

c) transferring the propylene copolymer (A) to a third polymerization stage and, preferably in the presence of a Ziegler-Natta catalyst, preparing a propylene ethylene elastomer (B) having an ethylene content in the range of from 20 to 60 wt.-%, and optionally comprising 1-butene comonomer units, and having an intrinsic viscosity IV in the range of from 2.0 to 5.0 dl/g, in a second gas phase reactor (GPR2); to obtain a heterophasic polypropylene composition having a melt flow rate $MFR_2$ (230 °C), determined according to ISO1133, in the range of from 10 to 100 g/10 min, and a melting temperature $T_m$, determined according to differential scanning calorimetry (DSC) described herein, in the range of from 150 to 167 °C.

It has also been found that the above-described object can be achieved by an article, preferably a film or a molded article, comprising the heterophasic polypropylene composition, as well as use of the heterophasic polypropylene composition for the manufacture of the respective article.

**Description of the invention**

***Heterophasic polypropylene composition***

The present invention relates to a heterophasic polypropylene composition.

The heterophasic polypropylene composition according to the present invention comprises or consists of a propylene copolymer (A) and a propylene ethylene elastomer (B).

The term *'heterophasic polypropylene composition'* as used herein means that at least two distinct phases are present in the composition, i.e., a propylene copolymer (A) and a propylene ethylene elastomer (B). The propylene copolymer (A) forms a crystalline matrix of the heterophasic polypropylene composition and the propylene ethylene elastomer (B) is dispersed in the crystalline matrix. Presence of the distinct phases is easily detectable via DSC analysis: the crystalline matrix propylene copolymer (A) will show a melting point higher than that of the propylene ethylene elastomer (B).

The term *'propylene copolymer'* as used herein denotes a polymer comprising, based on to the total weight of the polymer, at least 50 wt.-% of propylene monomer units and further alpha-olefin comonomer units different from propylene.

The wording *'alpha-olefin'* units (e.g., propylene, ethylene, 1-butene units etc.) used herein for contents of the polymer is to be understood to teach these units for preparing the polymer. The resultant polymer contains the respective units derived from these alpha-olefin monomer units.

Unless otherwise indicated, percentages throughout this disclosure are percentages by weight (wt.-%) based on the total weight of the respectively described enclosing entity.

The heterophasic polypropylene composition may comprise from 55 to 90 wt.-%, preferably from 60 to 88 wt.-%, and more preferably from 65 to 85 wt.-%, based on the total weight of the heterophasic polypropylene composition, of a propylene copolymer (A).

The heterophasic polypropylene composition may comprise from 10 to 45 wt.-%, preferably from 12 to 40 wt.-%, and more preferably from 15 to 35 wt.-%, based on the total weight of the heterophasic polypropylene composition, of a propylene ethylene elastomer (B).

The heterophasic polypropylene composition may comprise from 55 to 90 wt.-%, preferably from 60 to 88 wt.-%, and more preferably from 65 to 85 wt.-%, based on the total weight of the heterophasic polypropylene composition and determined at 25 °C according to ISO16152, of a xylene insoluble fraction (XI) comprising a propylene copolymer (A).

The heterophasic polypropylene may composition comprise from 10 to 45 wt.-%, preferably from 12 to 40 wt.-%, and more preferably from 15 to 35 wt.-%, based on the total weight of the heterophasic polypropylene composition and determined at 25 °C according to ISO16152, of xylene soluble fraction (XS) comprising a propylene ethylene elastomer (B).

Preferably, the xylene insoluble fraction (XI) comprises at least 90 wt.-%, more preferably at least 95 wt.-% and up to 100 wt.-% of a propylene copolymer (A), based on the total weight of the xylene insoluble fraction (XI).

Preferably, the xylene soluble fraction (XS) comprises at least 90 wt.-%, more preferably at least 95 wt.-% and up to 100 wt.-% of a propylene ethylene elastomer (B), based on the total weight of the xylene soluble fraction (XS).

The heterophasic polypropylene composition is obtained or obtainable by a polymerization process using a Ziegler-Natta catalyst. Preferably, the heterophasic polypropylene composition is produced using a Ziegler-Natta catalyst according to the preferred embodiments as described with respect to the preparation of the heterophasic polypropylene composition herein. At least one polymer selected from propylene copolymer (A), one of the factions (A1) and (A2) of propylene copolymer (A), and propylene ethylene elastomer (B), is prepared in the presence of a Ziegler-Natta catalyst. Preferably, all these polymers are prepared in the presence of a Ziegler-Natta catalyst.

The heterophasic polypropylene composition is a terpolymer comprising propylene, 1-butene and ethylene monomer units. The 1-butene content in the heterophasic polypropylene composition is preferably in the range of from 0.5 to 5.0 wt.-%, more preferably from 0.6 to 4.0 wt.-%, and even more preferably from 0.7 to 3.0 wt.-%. The ethylene content in the heterophasic polypropylene composition is preferably in the range of from 1.0 to 20.0 wt.-%, more preferably from 3.0 to 15.0 wt.-%, and even more preferably from 5.0 to 13.0 wt.-%. All contents are based on the total weight of the heterophasic polypropylene composition.

The 1-butene content in the xylene insoluble fraction (XI) is in the range of from 1.0 to 10.0 wt.-%, preferably from 1.2 to 8.0 wt.-%, and even more preferably from 1.5 to 5.0 wt.-%. The ethylene content in the xylene insoluble fraction (XI) is in the range of from 0 to 6.0 wt.-%. If ethylene is present, its content is preferably in the range of from 0.1 to 6.0 wt.-%, more preferably from 0.5 to 5.5 wt.-%, and even more preferably from 1.0 to 5.0 wt.-%. All contents are based on the total weight of the xylene insoluble fraction (XI).

The 1-butene content in the xylene soluble fraction (XS) is preferably in the range of from 0 to 5.0 wt.-%. If 1-butene is present, its content is preferably in the range of from 0.1 to 5.0 wt.-%, more preferably from 0.5 to 4.5 wt.-%, and even more preferably from 1.0 to 4.0 wt.-%. The ethylene content in the xylene soluble fraction (XS) is in the range of from 20 to 60 wt.-%, preferably from 22 to 50 wt.-%, and even more preferably from 25 to 45 wt.-%. All contents are based on the total weight of the xylene soluble fraction (XS).

The comonomer contents in the heterophasic polypropylene composition, the xylene soluble fraction (XS) and xylene insoluble fraction (XI) and in the propylene copolymers are determined according to NMR spectroscopy, as described in the method section.

Preferably, propylene and 1-butene and ethylene are the only monomers present in the heterophasic polypropylene composition, i.e., 1-butene and ethylene are the only comonomers. It is preferred that the heterophasic polypropylene composition is substantially free of units derived from other alpha-olefin monomers (i.e., $C_5$ to $C_8$ alpha-olefin monomers), e.g., it comprises less than 0.1 wt.-%, preferably less than 0.05 wt.-%, and more preferably less than 0.01 wt.-% of other alpha-olefin monomers such as $C_5$ to $C_8$ alpha-olefin monomer units.

The xylene soluble fraction (XS) has an intrinsic viscosity IV, determined according to ISO1628-1 & 3, in the range of from 2.0 to 5.0 dl/g, preferably 2.1 to 4.5 dl/g, and more preferably 2.2 to 4.0 dl/g.

The xylene insoluble fraction (XI) has a melt flow rate $MFR_2$ (230 °C), determined according to ISO1133, in the range of from 30 to 400 g/10 min, preferably from 40 to 300 g/10 min, and more preferably from 50 to 200 g/10 min.

The heterophasic polypropylene composition has a medium to high flowability. The heterophasic polypropylene composition has a melt flow rate $MFR_2$ (230 °C), determined according to ISO1133, in the range of from 10 to 100 g/10 min, preferably from 12 to 90 g/10 min, and more preferably from 15 to 80 g/10 min.

The heterophasic polypropylene composition has a melting temperature $T_m$, determined according to differential scanning calorimetry (DSC) described herein, in the range of from 150 to 167 °C, preferably from 155 to 166 °C, and more preferably from 156 to 165 °C.

Preferably, the heterophasic polypropylene composition has a crystallization temperature $T_c$, determined according to differential scanning calorimetry (DSC) described herein, in the range of from 105 to 135 °C, more preferably from 108 to 130 °C, even more preferably from 110 to 125 °C, and most preferably 112 to 120 °C. The crystallization temperature $T_c$ is preferably at least 105 °C and/or at most 135 °C.

The heterophasic polypropylene composition has an excellent stiffness. Preferably, the heterophasic polypropylene composition has a flexural modulus, determined according to ISO178, in the range of from 700 to 1200 MPa, more preferably from 750 to 1150 MPa, and even more preferably from 800 to 1100 MPa. The flexural modulus is preferably at least 700 MPa and/or at most 1200 MPa.

The heterophasic polypropylene composition has excellent impact properties. Preferably, the heterophasic polypropylene composition has an impact strength at +23 °C, determined according to ISO179/1eA, in the range of from 7.0 to 20.0 $kJ/m^2$, more preferably from 7.5 to 16.0 $kJ/m^2$, and even more preferably from 8.0 to 14.0 $kJ/m^2$. The impact strength at +23 °C is preferably at least 7.0 $kJ/m^2$ and/or at most 20.0 $kJ/m^2$.

Preferably, the heterophasic polypropylene composition has an impact strength at -20 °C, determined according to ISO179/1eA, in the range of from 3.0 to 10.0 $kJ/m^2$, more preferably from 3.4 to 9.0 $kJ/m^2$, and even more preferably from 3.5 to 8.0 $kJ/m^2$. The impact strength at -20 °C is preferably at least 3.0 $kJ/m^2$ and/or at most 10.0 $kJ/m^2$.

Preferably, the propylene copolymer (A) and the propylene ethylene elastomer (B) are the sole polymer components in the heterophasic polypropylene composition. However, it is to be understood herein that the heterophasic polypropylene composition may comprise further components such as additives, which may optionally be added in a mixture with or without a carrier polymer (e.g., in a baster batch).

Suitable additives include fillers, lubricants, processing aids, antioxidants, UV absorbers, light stabilizers, nucleating agents, foaming or blowing agents, clarifiers and pigments.

The additives may be present in contents in the range of from 0.1 to 10.0 wt.-%, preferably from 0.3 to 5.0 wt.-%, more preferably from 0.5 to 3.0 wt.-%, based on the total weight of the heterophasic polypropylene composition.

*Propylene copolymer (A)*

The propylene copolymer (A) is a copolymer of propylene with 1-butene as comonomer. The content of 1-butene comonomer units in the propylene copolymer (A) is in the range of from 1.0 to 10.0 wt.-%, preferably from 1.2 to 8.0 wt.-%, and more preferably from 1.5 to 5.0 wt.-%.

The propylene copolymer (A) may comprise ethylene as further comonomer. The content of ethylene comonomer units in the propylene copolymer (A) is in the range of from 0 to 6.0 wt.-%. If ethylene is present, its content is preferably in the range of from 0.1 to 6.0 wt.-%, more preferably from 0.5 to 5.5 wt.-%, and even more preferably from 1.0 to 5.0 wt.-%.

Preferably, propylene and 1-butene and optionally ethylene are the only monomers present in the propylene copolymer (A), i.e., 1-butene and optionally ethylene are the only comonomers. It is preferred that the propylene copolymer (A) is substantially free of units derived from other alpha-olefin monomers (i.e., $C_5$ to $C_8$ alpha-olefin monomers), e.g., it comprises less than 0.1 wt.-%, preferably less than 0.05 wt.-%, and more preferably less than 0.01 wt.-% of other alpha-olefin monomers such as $C_5$ to $C_8$ alpha-olefin monomer units.

The propylene copolymer (A) is obtainable or obtained by a polymerization process using a Ziegler-Natta catalyst. Preferably, the propylene copolymer (A) is produced using a Ziegler-Natta catalyst according to the preferred embodiments as described with respect to the preparation of the heterophasic polypropylene composition herein.

The propylene copolymer (A) has a melt flow rate $MFR_2$ (230 °C), determined according to ISO1133, in the range of from 30 to 400 g/10 min, preferably from 40 to 300 g/10 min, and more preferably from 50 to 200 g/10 min.

The propylene copolymer (A) composition preferably has a melting temperature $T_m$, determined according to differential scanning calorimetry (DSC) described herein, in the range of from 150 to 167 °C, more preferably from 155 to 166 °C, and even more preferably from 156 to 165 °C.

Preferably, the propylene copolymer (A) has a molecular weight distribution $M_w/M_n$, being the ratio of the weight average molecular weight $M_w$ and the number average molecular weight $M_n$, in the range of from 3.0 to 20.0, more preferably from 4.0 to 15.0, and most preferably 5.5 to 9.0.

Preferably, the propylene copolymer (A) has a xylene soluble fraction (XS), determined at 25 °C according to ISO16152, in the range of from 0 to 8.0 wt.-%, more preferably from 1.0 to 7.5 wt.-%, and even more preferably from 1.5 to 7.0 wt.-%. The xylene soluble fraction (XS) preferably amounts to at most 8.0 wt.-% of the propylene copolymer (A).

The propylene copolymer (A) is preferably a multimodal polymer. The term '*multimodal polymer*' as used herein denotes a polymer composition comprising at least two polymer fractions, which have been produced under different polymerization conditions resulting in different (weight average) molecular weights and/or molecular weight distributions for the fractions and/or different comonomer contents. The prefix '*multi*' relates to the number of different polymer fractions the polymer consists of. The term '*multimodal polymer*' comprises bimodal, trimodal, tetramodal etc. polymers.

More preferably, the propylene copolymer (A) is a bimodal polymer, i.e., it consists of two different polymer fractions, e.g., a first propylene polymer fraction (A1) and a second propylene polymer fraction (A2), each comprising a propylene polymer. The two fractions are different from each other.

In a particular embodiment, the propylene copolymer (A) comprises, or consists of, a first propylene polymer fraction (A1) being a propylene homopolymer or a propylene copolymer of propylene with 1-butene comonomer units and/or ethylene comonomer units, preferably being a propylene homopolymer or a propylene copolymer having less than 1 wt.-% of comonomer units, based on the total weight of the first propylene polymer fraction (A1); and a second propylene polymer fraction (A2), being a propylene copolymer of propylene with 1-butene comonomer units and optionally ethylene comonomer units. Embodiments of the first and second propylene polymer fraction (A1) and (A2) are described below.

Preferably, the propylene copolymer (A) comprises, or consists of, from 25 to 75 wt.-%, based on the total weight of the propylene copolymer (A), of a first propylene polymer fraction (A1); and from 75 to 25 wt.-%, based on the total weight of the propylene copolymer (A), of a second propylene polymer fraction (A2).

In other words, the weight ratio of first propylene polymer fraction (A1) to the second propylene polymer fraction (A2) in the propylene copolymer (A) is preferably in the range of from 25:75 to 75:25, more preferably of from 30:70 to 70:30, most preferably of from 35:65 to 65:35.

### First propylene polymer fraction (A1)

The first propylene polymer fraction (A1) preferably consists of a single propylene polymer. The propylene polymer of the first propylene polymer fraction (A1) may be a propylene homopolymer or a propylene copolymer. If the propylene polymer of the first propylene polymer fraction (A1) is a propylene copolymer, it is copolymer of propylene with 1-butene comonomer units and/or ethylene comonomer units, preferably with ethylene comonomer units. In a preferred embodiment, the propylene polymer of the first propylene polymer fraction (A1) is a propylene homopolymer or a propylene copolymer having less than 1 wt.-% of comonomer units, based on the total weight of the first propylene polymer fraction (A1).

The first propylene polymer fraction (A1) is preferably obtainable or obtained by a polymerization process using a Ziegler-Natta catalyst. Preferably, the first propylene polymer fraction (A1) is produced using a Ziegler-Natta catalyst according to the preferred embodiments as described with respect to the preparation of the heterophasic polypropylene composition herein.

Preferably, the first propylene polymer fraction (A1) has a melt flow rate $MFR_2$ (230 °C), determined according to ISO1133, in the range of from 30 to 400 g/10 min, more preferably from 40 to 300 g/10 min, and even more preferably from 50 to 200 g/10 min.

Preferably, the first propylene polymer fraction (A1) has a xylene soluble fraction (XS), determined at 25 °C according to ISO16152, in the range of from 0 to 8.0 wt.-%, more preferably from 1.0 to 7.5 wt.-%, and even more preferably from 1.5 to 7.0 wt.-%. The xylene soluble fraction (XS) preferably amounts to at most 8.0 wt.-% of the first propylene polymer fraction (A1).

Preferably, the first propylene polymer fraction (A1) is present in the propylene copolymer (A), based on the total weight of the propylene copolymer (A), in an amount of from 25 to 75 wt.-%, preferably from 30 to 70 wt.-%, and more preferably from 35 to 65 wt.-%.

### Second propylene polymer fraction (A2)

The second propylene polymer fraction (A2) is different from the first propylene polymer fraction (A1).

The second propylene polymer fraction (A2) preferably consists of a single propylene polymer. The propylene polymer of the second propylene polymer fraction (A2) preferably is a propylene copolymer of propylene with 1-butene comonomer units and optionally ethylene comonomer units. In one particular embodiment, the propylene polymer of the second propylene polymer fraction (A2) is a propylene copolymer of propylene with 1-butene comonomer units. In another particular embodiment, the propylene polymer of the second propylene polymer fraction (A2) is a propylene copolymer of propylene with 1-butene comonomer units and ethylene comonomer units.

In a preferred embodiment, the second propylene polymer fraction (A2) may contain a higher comonomer content than the first propylene polymer fraction (A1).

In a similarly preferred embodiment, the second propylene polymer fraction (A2) may contain more different comonomers (e.g. being a copolymer or terpolymer) than the first propylene polymer fraction (A1), e.g. being a homopolymer or copolymer.

The second propylene polymer fraction (A2) is preferably obtainable or obtained by a polymerization process using a Ziegler-Natta catalyst. Preferably, the second propylene polymer fraction (A2) is produced using a Ziegler-Natta catalyst according to the preferred embodiments as described with respect to the preparation of the heterophasic polypropylene composition herein.

Preferably, the second propylene polymer fraction (A2) has a melt flow rate $MFR_2$ (230 °C), determined according to ISO1133, in the range of from 30 to 400 g/10 min, more preferably from 40 to 300 g/10 min, and even more preferably from 50 to 200 g/10 min.

The $MFR_2$ of the second propylene polymer fraction (A2) is determined according to equation (1) as described with respect to the preparation of the heterophasic polypropylene composition herein.

Preferably, the second propylene polymer fraction (A2) has a xylene soluble fraction (XS), determined at 25 °C according to ISO16152, in the range of from 0 to 8.0 wt.-%, more preferably from 1.0 to 7.5 wt.-%, and even more preferably from 1.5 to 7.0 wt.-%. The xylene soluble fraction (XS) preferably amounts to at most 8.0 wt.-% of the second propylene polymer fraction (A2).

The xylene soluble fraction (XS) of the second propylene polymer fraction (A2) is determined according to equation (2) as described with respect to the preparation of the heterophasic polypropylene composition herein.

Preferably, the second propylene polymer fraction (A2) is present in the propylene copolymer (A), based on the total weight of the propylene copolymer (A), in an amount of from 25 to 75 wt.-%, preferably from 30 to 70 wt.-%, and more preferably from 35 to 65 wt.-%.

*Propylene ethylene elastomer (B)*

The heterophasic polypropylene composition comprises a propylene ethylene elastomer (B). The propylene ethylene elastomer (B) is a copolymer of propylene and ethylene. The ethylene content in the propylene ethylene elastomer (B), based on the total weight of the propylene ethylene elastomer (B) is in the range of from 20 to 60 wt.-%, more preferably from 22 to 50 wt.-%, and even more preferably from 25 to 45 wt.-%. The ethylene content is determined by NMR spectroscopy, as described in the method section.

The propylene ethylene elastomer (B) may comprise 1-butene comonomer units. The content of 1-butene comonomer units in the propylene ethylene elastomer (B) is preferably in the range of from 0 to 5.0 wt.-%. If 1-butene is present, its content is preferably in the range of from 0.1 to 5.0 wt.-%, more preferably from 0.5 to 4.5 wt.-%, and even more preferably from 1.0 to 4.0 wt.-%.

Preferably, propylene and ethylene and optionally 1-butene are the only monomers present in the propylene ethylene elastomer (B). It is preferred that propylene ethylene elastomer (B) is substantially free of units derived from other alpha-olefin monomers (i.e., $C_5$ to $C_8$ alpha-olefin monomers), e.g., it comprises less than 0.1 wt.-%, preferably less than 0.05 wt.-%, and more preferably less than 0.01 wt.-% of other alpha-olefin monomers such as $C_5$ to $C_8$ alpha-olefin monomer units.

Preferably, the propylene ethylene elastomer (B) is obtainable or obtained by a polymerization process using a Ziegler-Natta catalyst. More preferably, the propylene ethylene elastomer (B) is produced using a Ziegler-Natta catalyst according to the preferred embodiments as described with respect to the preparation of the heterophasic polypropylene composition herein.

In a preferred embodiment, all polymers of the heterophasic polypropylene composition are obtainable or obtained by polymerization processes using a Ziegler-Natta catalyst.

The propylene ethylene elastomer (B) has an intrinsic viscosity IV, determined according to ISO1628-1 & 3, in the range of from 2.0 to 5.0 dl/g, preferably 2.1 to 4.5 dl/g, and more preferably 2.2 to 4.0 dl/g.

Preferably, the copolymer of ethylene (B) has a molecular weight distribution $M_w/M_n$, being the ratio of the weight average molecular weight $M_w$ and the number average molecular weight $M_n$, in the range of from 3.0 to 20.0, more preferably from 4.0 to 15.0, and most preferably 5.5 to 9.0.

*Preparation of a heterophasic polypropylene composition*

The heterophasic polypropylene composition according to the present invention may be prepared by any known process in the art. Ideally, a process is used which produces a homogenous mixture of the various components. Typically, compounding is employed. Compounding usually involves mixing or/and blending the various components in a molten state, often by extrusion.

Preferably, the heterophasic polypropylene composition is produced in a multi-stage process wherein the propylene polymers are produced in subsequent stages.

In a preferred embodiment, the heterophasic polypropylene composition in any of the above-described embodiments is prepared by a multi-stage polymerization process, comprising

a) preparing a first propylene polymer fraction (A1) being a propylene homopolymer or a propylene copolymer of propylene with 1-butene comonomer units and/or ethylene comonomer units in a bulk phase reactor, preferably a loop reactor, in a first polymerization stage in the presence of a Ziegler-Natta catalyst;

b) transferring the first propylene polymer fraction (A1) to a second polymerization stage, and preparing a second propylene polymer fraction (A2) being a propylene copolymer of propylene with 1-butene comonomer units and optionally ethylene comonomer units in the presence of a Ziegler-Natta catalyst in a first gas phase reactor (GPR1); and

wherein the first propylene polymer fraction (A1) and the second propylene polymer fraction (A2) together form a propylene copolymer (A) of propylene with 1-butene comonomer units in a content in the range of from 1.0 to 10.0 wt.-% and optionally ethylene comonomer units in a content in the range of from 0 to 6.0 wt.-%, having a melt flow rate $MFR_2$ (230 °C), determined according to ISO1133, in the range of from 30 to 400 g/10 min;

c) transferring the propylene copolymer (A) to a third polymerization stage and, preferably in the presence of a Ziegler-Natta catalyst, preparing a propylene ethylene elastomer (B) having an ethylene content in the range of from 20 to 60 wt.-%, and optionally comprising 1-butene comonomer units, and having an intrinsic viscosity IV in the range of from 2.0 to 5.0 dl/g, in a second gas phase reactor (GPR2); to obtain a heterophasic polypropylene composition having a melt flow rate $MFR_2$ (230 °C), determined according to ISO1133, in the range of from 10 to 100 g/10 min, and a melting temperature $T_m$, determined according to differential scanning calorimetry (DSC) described herein, in the range of from 150 to 167 °C.

The present invention also relates to a process for the preparation of a heterophasic polypropylene composition by a multi-stage polymerization process, comprising the above-described steps a), b) and c). The process may lead to a heterophasic polypropylene composition in any of the above-described embodiments.

Accordingly, in step a) of the process, propylene, 1-butene and/or ethylene is fed into the bulk phase reactor. In step b) of the process, propylene, 1-butene and optionally ethylene are fed into the first gas phase reactor, where the first propylene polymer fraction (A1) has been placed. To the so produced propylene copolymer (A), propylene, ethylene and optionally 1-butene are added in a second gas phase reactor to obtain the final propylene polymer in step c) of the process.

Thus, preferably, the propylene copolymer (A) is produced in a multi-stage process wherein the propylene polymer fractions (A1) and (A2) are produced in subsequent stages.

The properties of the second propylene polymer fraction (A2) produced in a higher stage of the multi-stage process may be calculated as follows.

The $MFR_2$ of the second propylene polymer fraction (A2), produced in the second reactor is determined according to equation (1):

$$\log(MFR\,(A2)) = \frac{\log(MFR\,(A)) - w(A1)*\log(MFR(A1))}{w(A2)} \quad \text{equation (1)}$$

wherein

MFR(A) is the $MFR_2$ of the propylene copolymer (A)
w(A1) and w(A2) are the weight fractions of the propylene polymer fractions (A1) and (A2) in the propylene copolymer (A)
MFR(A1) is the $MFR_2$ of the propylene polymer fraction (A1) produced in the first reactor.

The xylene soluble content of the second propylene polymer fraction (A2), produced in the second reactor is determined according to equation (2):

$$XS(A2) = \frac{XS(A) - w(A1)*XS(A1)}{w(A2)} \quad \text{equation (2)}$$

wherein

XS(A) is the xylene soluble content of the propylene copolymer (A)
w(A1) and w(A2) are the weight fractions of the propylene polymer fractions (A1) and (A2) in the propylene copolymer (A)
XS(A1) is the xylene soluble content of the propylene polymer fraction (A1) produced in the first reactor.

Respectively adapted equations may be used to determine the parameters of the second propylene polymer fraction (A2) or of polymers prepared in further stages of the process.

Thus, although not directly measurable on the multi-stage process products, the properties of the polymers produced in higher stages of such multi-stage processes may be determined by applying the above method.

Generally, polymers produced in a multi-stage process are also designated as '*in-situ*' blends. The resulting end product consists of an intimate mixture of the polymers from the two or more reactors. These two or more polymers may have different molecular weight distribution curves, and/or they may differ in terms of comonomer content or type. The end product thus contains a mixture of two or more polymers with differing properties, i.e., it is a multimodal polymer mixture.

The first polymerization stage for producing the first propylene polymer fraction (A1) is preferably a slurry polymerization step. The slurry polymerization usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amount of methane, ethane and/or butane.

The temperature in the first polymerization stages is typically from 60 to 100 °C, preferably from 70 to 90 °C. An excessively high temperature should be avoided to prevent partial dissolution of the polymer into the diluent and the fouling of the reactor. The pressure is typically from 1 to 150 bar, preferably from 40 to 80 bar.

The slurry polymerization may be conducted in any known reactor used for slurry polymerization, such as any bulk phase reactor. Such reactors include a continuous stirred tank reactor and a loop reactor. It is especially preferred to conduct the polymerization in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654. It is thus preferred to conduct the first polymerization stage as a slurry polymerization in a loop reactor.

The slurry may be withdrawn from the reactor either continuously or intermittently. A preferred way of intermittent withdrawal is the use of settling legs where slurry is allowed to concentrate before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and WO-A-2007/025640. The continuous withdrawal is advantageously combined with a suitable concentration method, as disclosed in EP-A-1310295 and EP-A-1591460. It is preferred to withdraw the slurry from the first polymerization stage continuously.

Hydrogen is typically introduced into the first polymerization stage for controlling the $MFR_2$ of the propylene copolymer (A). The amount of hydrogen needed to reach the desired $MFR_2$ depends on the catalyst used and the polymerization conditions, as will be appreciated by the skilled worker.

The average residence time in the first polymerization stage is typically from 20 to 120 minutes, preferably from 30 to 80 minutes. As it is well known in the art the average residence time $\tau$ can be calculated from equation (3) below:

$$\tau = \frac{V_R}{Q_o} \qquad \text{equation (3)}$$

wherein

$V_R$ is the volume of the reaction space (in case of a loop reactor, the volume of the reactor, in case of the fluidized bed reactor, the volume of the fluidized bed)

$Q_o$ is the volumetric flow rate of the product stream (including the polymer product and the fluid reaction mixture).

The production rate is suitably controlled with the catalyst feed rate. It is also possible to influence the production rate by suitable selection of the monomer concentration. The desired monomer concentration can then be achieved by suitably adjusting the propylene feed rate.

The first propylene polymer fraction (A1) is transferred to the second polymerization stage for producing the second propylene polymer fraction (A2), preferably a gas phase polymerization step, i.e., carried out in a first gas-phase reactor (GPR1). Any suitable gas phase reactor known in the art may be used, such as a fluidized bed gas phase reactor.

For gas phase reactors, the reaction temperature used will generally be in the range 60 to 115 °C (e.g. 70 to 110 °C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer.

A chain transfer agent (e.g., hydrogen) is typically added to the second polymerization stage.

The split between the first and second polymerization fractions may be in the range of from 25:75 to 75:25, more preferably from 30:70 to 70:30, most preferably from 35:65 to 65:35.

In the first gas-phase reactor (GPR1), a mixture of the first propylene polymer fraction (A1) and the second propylene polymer fraction (A2) is formed being the propylene copolymer (A).

The propylene copolymer (A) is transferred to the third polymerization stage for producing the propylene ethylene elastomer (B), preferably a gas phase polymerization step, i.e., carried out in a second gas-phase reactor (GPR2). Any suitable gas phase reactor known in the art may be used, such as a fluidized bed gas phase reactor. The condition range described above for the first gas phase reactor are similarly used for the second gas phase reactor.

The split between the propylene copolymer (A) fraction and the propylene ethylene elastomer (B) fraction may be in the range of from 90:10 to 55:45, more preferably from 85:15 to 65:35. The resultant polymer is the heterophasic polypropylene composition.

A preferred multistage process is the above-identified slurry-gas phase process, such as developed by Borealis and known as the Borstar® technology. In this respect, reference is made to the EP applications EP-A-0887379 and EP-A-0517868.

The polymerization steps discussed above may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is typically conducted in slurry.

Thus, the prepolymerization step may be conducted in a loop reactor. The prepolymerization is then preferably conducted in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons.

The temperature in the prepolymerization step is typically from 0 to 60 °C, preferably from 10 to 50 °C and more preferably from 15 to 40 °C.

The pressure is not critical and is typically from 1 to 150 bar, preferably from 40 to 80 bar.

The amount of monomer is typically such that from 0.1 to 1000 grams of monomer per one gram of solid catalyst component is polymerized in the prepolymerization step. As the person skilled in the art knows, the catalyst particles recovered from a continuous prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst typically is within the limits specified above.

The molecular weight of the prepolymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. In such cases it is necessary to introduce as much cocatalyst into the prepolymerization stage that a sufficient polymerization reaction is obtained therein.

It is understood within the scope of the invention, that the amount of polymer produced in the prepolymerization typically lies within 1.0 to 5.0 wt.-%, based on the total weight of the heterophasic propylene composition.

The propylene copolymer (A) is preferably obtained by a polymerization process using a Ziegler-Natta catalyst. Preferably, both the first propylene polymer fraction (A1) and the second propylene polymer fraction (A2) are obtained by a polymerization process using a Ziegler-Natta catalyst. Also preferably, the propylene ethylene elastomer (B) is obtained by a polymerization process using a Ziegler-Natta catalyst. In a preferred embodiment, a Ziegler-Natta catalyst is used in all stages of the polymerization process.

Preferably, the Ziegler-Natta catalyst comprises:

a) compound(s) of a transition metal of Group 4 to 6 of IUPAC;

b) a Group 2 metal compound;

c) an internal donor, wherein said internal donor is a non-phthalic compound, preferably is a non-phthalic acid ester;

d) a co-catalyst; and

e) optionally an external donor.

The internal donor is preferably selected from (di)esters of non-phthalic carboxylic (di)acids, 1,3-diethers, derivatives and mixtures thereof. Most preferred internal donors are (di)esters of citraconic acid.

Preferably, the Ziegler-Natta catalyst does not comprise phthalic acid esters, and the heterophasic polypropylene composition is free of phthalic acid esters and their respective decomposition products.

Suitable Ziegler-Natta catalysts for use in the above-described polymerization reactions and preparation thereof are described in EP-A-3562850.

It will be appreciated that the propylene polymers may contain standard polymer additives as described above.

After preparation, the obtained polymer is typically extruded and pelletized. The extrusion may be conducted in the manner generally known in the art, preferably in a twin screw extruder. One example of suitable twin screw extruders is a corotating twin screw extruder. Those are manufactured, among others, by Coperion or Japan Steel Works. Another example is a counter-rotating twin screw extruder. Such extruders are manufactured, among others, by Kobe Steel and Japan Steel Works. Before the extrusion at least part of the desired additives, as mentioned above, are preferably mixed with the polymer. The extruders typically include a melting section where the polymer is melted and a mixing section where the polymer melt is homogenized. Melting and homogenization are achieved by introducing energy into the polymer. Suitable level of specific energy input (SEI) is from about 150 to about 450 kWh/ton polymer, preferably from 175 to 350 kWh/ton.

*Article and use*

The present invention also relates to an article comprising the heterophasic polypropylene composition according to the invention in any of the above-described embodiments, and to the use of the heterophasic polypropylene composition for the manufacture of an article. Preferable articles include films and molded articles.

The films may be prepared by any method known in the art, such as casting or extrusion. The films may be multilayer or monolayer films, but are preferably monolayer films. In one embodiment, the films consist of heterophasic polypropylene composition as the sole polymer component.

As used herein the term '*molded article*' denotes an article that are produced by any conventional molding technique, e.g., injection molding, stretch molding, compression molding, rotomolding or injection stretch blow molding. Articles produced by injection molding, stretch molding, or injection stretch blow molding are preferred. Articles produced by injection molding are especially preferred. The molded articles preferably are thin-walled articles having a wall thickness of 300 $\mu$m to 2 mm. More preferably, the thin-walled articles have a wall thickness of 300 $\mu$m to 1400 $\mu$m, and even more preferably the thin-walled articles have a wall thickness of 500 $\mu$m to 900 $\mu$m. The molded articles of the present invention can be containers, such as cups, buckets, beakers, trays or parts of such articles, such as see-through-windows, lids, or the like.

The articles according to the invention may be employed in a number of end applications, in particular thin wall packaging applications and food packaging applications. The articles of the current invention are especially suitable for containing food, especially frozen food, such as ice-cream, frozen liquids, sauces, pre-cooked convenience products, and the like.

**Measurement method**

All parameters mentioned in the description of the invention or the examples were measured according to the methods described below.

*Melt Flow Rate*

The melt flow rate (MFR) was determined according to ISO1133 and is indicated in g/10 min. The MFR is an indication of the melt viscosity of the polymer. The MFR is determined at 190 °C for PE and 230 °C for PP. The load under which the melt flow rate is determined is usually indicated as a subscript, for instance $MFR_2$ is measured under 2.16 kg load (condition D).

*Description of microstructure quantification by NMR spectroscopy*

Quantitative nuclear-magnetic resonance (NMR) spectroscopy was used to quantify the comonomer content of the polymers.

Quantitative $^{13}C\{^{1}H\}$ NMR spectra recorded in the molten-state using a Bruker Avance III 500 NMR spectrometer operating at 500.13 and 125.76 MHz for $^{1}H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}.

Standard single-pulse excitation was employed utilising the NOE at short recycle delays of 3s {pollard04, klimke06} and the RS-HEPT decoupling scheme {fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm and assignments done according {brandolini01, randall89, resconi00}.

Characteristic signals corresponding to the incorporation of 1-butene were observed and the comonomer content quantified in the following way. The amount isolated 1-butene incorporated in PBP sequences was quantified using the integral of the $\alpha B2$ sites at 43.6 ppm accounting for the number of reporting sites per comonomer:

$$B = I_{\alpha B2} / 2$$

If observed the amount consecutively incorporated 1-butene in PBBP sequences was quantified using the integral of the $\alpha\alpha B2$ site at 40.6 ppm accounting for the number of reporting sites per comonomer:

$$BB = 2 * I_{\alpha\alpha B2}$$

In case of presence of consecutively incorporated 1-butene (BB) the isolated incorporated butene (B) needs to be corrected due to influencing signals by subtracting BB/2.

Characteristic signals corresponding to different incorporations of ethylene were observed and the comonomer content quantified utilising following assignments and equations for the respective sequences:

| chemical shift [ppm] | assignment |
|---|---|
| 47.9 - 45.1 | $S\alpha\alpha$ |
| 30.1 | $S\gamma\delta$ |
| 29.7 | $S\delta\delta$ |
| 27.7 - 26.5 | $S\beta\delta$ |
| 25.1 - 23.9 | $S\beta\beta$ |
| sequence | signal / equation |
| E | $I_{S\beta\beta}$ |
| EE | $I_{S\beta\delta}$ |
| EEE | $I_{(S\delta\delta/2) + (S\gamma\delta/4)}$ |

The amount of P was quantified based on the $S\alpha\alpha$ methylene site including additional propene units not covered by $S\alpha\alpha$:

$$P = I_{S\alpha\alpha} + B + (0.5*BB) + E + (0.5*EE)$$

The total amount of comonomers was then calculated as follows:

$$B_{total} = B + BB \qquad E_{total} = E + EE + EEE \qquad P_{total} = P$$

$$B[mol\%] = 100* B_{total} / (B_{total} + E_{total} + P_{total})$$

$$E[mol\%] = 100* E_{total} / (B_{total} + E_{total} + P_{total})$$

$$P[mol\%] = 100* P_{total} / (B_{total} + E_{total} + P_{total})$$

The weight percent comonomer incorporation was calculated from the mol%:

$$B\ [wt\%] = 100*(B[mol\%]*56.11) / ((E[mol\%] *28.05) + (B[mol\%] *56.11) + (P[mol\%]*42.08))$$

$$E\ [wt\%] = 100*(E[mol\%]*28.05) / ((E[mol\%] *28.05) + (B[mol\%] *56.11) + (P[mol\%]*42.08))$$

For e.g. xylene soluble fraction where butene was not observed the related equations collapse to the following:

$$P= I_{S\alpha\alpha} + E + (0.5*EE)$$

The total amount of comonomer was then calculated as follows:

$$E_{total} = E + EE + EEE \qquad P_{total} = P$$

$$E[mol\%] = 100* E_{total} / (E_{total} + P_{total})$$

$$P[mol\%] = 100* P_{total} / (E_{total} + P_{total})$$

The weight percent comonomer incorporation was calculated from the mol%:

$$E\ [wt\%] = 100*(E[mol\%]*28.05) / ((E[mol\%] *28.05) + (P[mol\%]*42.08))$$

References

klimke06: Klimke, K., Parkinson, M., Piel, C., Kaminsky, W., Spiess, H.W., Wilhelm, M., Macromol. Chem. Phys. 2006;207:382.

parkinson07: Parkinson, M., Klimke, K., Spiess, H.W., Wilhelm, M., Macromol. Chem. Phys. 2007;208:2128.

pollard04: Pollard, M., Klimke, K., Graf, R., Spiess, H.W., Wilhelm, M., Sperber, O., Piel, C., Kaminsky, W., Macromolecules 2004;37:813.

filip05: Filip, X., Tripon, C., Filip, C., J. Mag. Resn. 2005, 176, 239

griffin07: Griffin, J.M., Tripon, C., Samoson, A., Filip, C., and Brown, S.P., Mag. Res. in Chem. 2007 45, S1, S198

castignolles09: Castignolles, P., Graf, R., Parkinson, M., Wilhelm, M., Gaborieau, M., Polymer 50 (2009) 2373

resconi00: Resconi, L., Cavallo, L., Fait, A., Piemontesi, F., Chem. Rev. 2000, 100, 1253

randall89: J. Randall, Macromol. Sci., Rev. Macromol. Chem. Phys. 1989, C29, 201.

brandolini01: A.J. Brandolini, D.D. Hills, "NMR spectra of polymers and polymer additives", Marcel Deker Inc., 2000

abis86: L. Abis, Mackromol. Chem. 187, 1877-1886 (1986)

*Molecular weight and molecular weight distribution*

Molecular weight averages ($M_z$, $M_w$ and $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO16014-1:2003, ISO16014-2:2003, ISO16014-4:2003 and ASTM D 6474-12 using the following formulas:

$$M_n = \frac{\sum_{i=1}^{N} A_i}{\sum_{i=1}^{N}(A_i/M_i)} \quad (1)$$

$$M_w = \frac{\sum_{i=1}^{N}(A_i \times M_i)}{\sum_{i=1}^{N} A_i} \quad (2)$$

$$M_z = \frac{\sum_{i=1}^{N}(A_i \times M_i^2)}{\sum_{i=1}^{N}(A_i/M_i)} \quad (3)$$

For a constant elution volume interval $\Delta V_i$, where $A_i$ and $M_i$ are the chromatographic peak slice area and polyolefin molecular weight (MW), respectively associated with the elution volume, $V_i$, where $N$ is equal to the number of data points obtained from the chromatogram between the integration limits.

A high temperature GPC instrument, equipped with either infrared (IR) detector (IR4 or IR5 from PolymerChar (Valencia, Spain) or differential refractometer (RI) from Agilent Technologies, equipped with 3× Agilent-PLgel Olexis and 1× Agilent-PLgel Olexis Guard columns was used. As the solvent and mobile phase 1,2,4-trichlorobenzene (TCB) stabilized with 250 mg/L 2,6-Di-tert-butyl-4-methylphenol) was used. The chromatographic system was operated at 160 °C and at a constant flow rate of 1 mL/min. 200 μL of sample solution was injected per analysis. Data collection was performed using either Agilent Cirrus software version 3.3 or PolymerChar GPC-IR control software.

The column set was calibrated using universal calibration (according to ISO16014-2:2003) with 19 narrow MWD polystyrene (PS) standards in the range of 0.5 kg/mol to 11500 kg/mol. The PS standards were dissolved at room temperature over several hours. The conversion of the polystyrene peak molecular weight to polyolefin molecular weights is accomplished by using the Mark Houwink equation and the following Mark Houwink constants:

$$K_{PS} = 19 \times 10^{-3} \; mL/g, \qquad \alpha_{PS} = 0.655$$

$$K_{PE} = 39 \times 10^{-3} \; mL/g, \qquad \alpha_{PE} = 0.725$$

$$K_{PP} = 19 \times 10^{-3} \; mL/g, \qquad \alpha_{PP} = 0.725$$

A third order polynomial fit was used to fit the calibration data.

All samples were prepared in the concentration range of 0.5 to 1 mg/ml and dissolved at 160 °C for 2.5 hours (PP) or 3 hours (PE) under continuous gentle shaking.

*Flexural Modulus (FM)*

The flexural modulus was determined in a 3-point-bending test at 23 °C according to ISO178 on 80×10×4 mm³ test bars injection molded in line with ISO1873-2.

*Differential scanning calorimetry (DSC)*

Differential scanning calorimetry (DSC) analysis, melting temperature ($T_m$) and melt enthalpy ($H_m$), crystalli-

zation temperature ($T_c$), and heat of crystallization ($H_c$, HCR) were measured with a TA Instrument Q200 differential scanning calorimetry (DSC) on 5 to 7 mg samples. DSC was run according to ISO11357 / part 3/method C2 in a heat/cool/heat cycle with a scan rate of 10 °C/min in the temperature range of -30 to +225 °C. Crystallization temperature ($T_c$) and heat of crystallization ($H_c$) were determined from the cooling step, while melting temperature ($T_m$) and melt enthalpy ($H_m$) were determined from the second heating step.

Throughout the present description, the term $T_m$ is understood as peak temperature of melting as determined by DSC at a heating rate of 10 K/min.

Throughout the present description, the term $T_c$ is understood as peak temperature of crystallization as determined by DSC at a cooling rate of 10 K/min.

*Notched Impact Strength (NIS)*

The Charpy notched impact strength (NIS) was measured according to ISO179 1eA at +23 °C or at -20 °C, respectively, using injection molded bar test specimens of $80 \times 10 \times 4$ mm$^3$ prepared in accordance with ISO1873-2.

*Xylene soluble fraction*

The xylene soluble fraction (XS) and xylene insoluble fraction (XI) were determined according to ISO16152 at 25 °C.

*Intrinsic viscosity (IV)*

The IV of the xylene solubles was measured at 135 °C in decalin according to ISO1628-1 & 3.

**Examples**

*Preparation of the heterophasic polypropylene composition*

Two heterophasic polypropylene compositions were prepared in the form of powder as Examples IE1 and IE2 according to the invention in a multi-stage polymerization process as described above, under the conditions outlined in Table 1. The catalyst was a Ziegler-Natta catalysts prepared as described in EP-A-3562850. The solid catalyst component was used along with triethylaluminium (TEAL) as co-catalyst and dicyclo pentyl dimethoxy silane (D-donor) as external donor.

*Table 1: Process conditions*

| Prepoly reactor | IE1 | IE2 | CE2 |
|---|---|---|---|
| Temperature [°C] | 20 | 20 | 20 |
| TEAL/C3 [g/t] | 172 | 172 | 0 |
| Donor/C3 [g/t] | 60 | 60 | 0 |
| Pressure reactor [barg] | 55 | 55 | 54 |
| **Loop reactor (A1)** | | | |
| Temperature [°C] | 75 | 75. | 65 |
| Pressure reactor [barg] | 55 | 54 | 54 |
| $H_2/C_3$ ratio [mol/kmol] | 9.61 | 9.60 | 0.24 |
| $C_4$ content [wt.-%] | 0 | 0 | 0 |
| Split [wt.-%] | 47 | 47 | 39 |
| $MFR_2$ (230°C) [g/10 min]) | 99 | 98 | 35 |
| XS [wt.-%] | 2.7 | 2.8 | 0.9 |
| **Gas phase reactor 1 (A2)** | | | |
| Temperature [°C] | 80 | 80 | 85 |

(continued)

| Gas phase reactor 1 (A2) | | | |
|---|---|---|---|
| $H_2/C_3$ ratio [mol/kmol] | 109.94 | 110.61 | 1.0 |
| $C_4/C_3$ ratio [mol/kmol] | 104.10 | 100.40 | 0 |
| $C_6/C_3$ ratio [mol/kmol] | 0 | 0 | 7 |
| $C_2/C_3$ ratio [mol/kmol] | 20.56 | 0.01 | 0 |
| Split [wt.-%] | 34 | 32 | 49 |
| $MFR_2$ (230 °C) [g/10 min]) | 76.50 | 80.60 | 42 |
| $C_4$ content [wt.-%] | 2.30 | 2.30 | 0 |
| $C_6$ content [wt.-%] | 0 | 0 | 2.5 |
| $C_2$ content [wt.-%] | 1.60 | 0 | 0 |
| XS [wt.-%] | 4.90 | 2.30 | 1.2 |
| Gas phase reactor 2 (B) | | | |
| Temperature [°C] | 80.0 | 80.0 | 80 |
| Pressure reactor [barg] | 19 | 19 | 27 |
| $H_2/C_3$ ratio [mol/kmol] | 118.0 | 106.0 | 0 |
| $C_4/C_3$ ratio [mol/kmol] | 3.8 | 3.4 | 0 |
| $C_2/C_3$ ratio [mol/kmol] | 365.0 | 400.0 | 11221 |
| Split [wt.-%] | 19 | 21 | 12 |

Both examples contained a propylene homopolymer as fraction (A1). Example IE1 contains a propylene copolymer of propylene with 1-butene and ethylene comonomer units as fraction (A2), while Example IE2 contains a propylene copolymer of propylene with only 1-butene comonomer units as fraction (A2). In both examples, the propylene ethylene elastomer (B) contains 1-butene comonomer units.

*Properties of the heterophasic polypropylene composition*

Examples IE1 and IE2 were compared with Comparative Examples CE1 and CE2.

Comparative Example CE1 is a heterophasic copolymer of propylene and ethylene (it does not contain 1-butene) that was produced with the same catalyst as Examples IE1 and IE2. It is commercially available from Borealis under the product name BE170CF.

Comparative Example CE2 is a heterophasic terpolymer comprising propylene, ethylene and 1-hexene which was prepared by a single-site catalyst (as described in EP-A-3126411) in a multi-stage polymerization process. CE2 comprises a propylene hexene matrix, wherein a propylene homopolymer was produced in the loop and a propylene hexene copolymer was produced in GPR1. In GPR2, a dispersed phase in the form of a propylene ethylene elastomer was prepared.

The powder mentioned above were mixed with 1500 ppm of Irganox B215 (BASF) and 500 ppm of CEASIT FI (Baerlocher), and then compounded in a twin screw extruder ZSK 18, with melt temperature of 200°C and throughput of 7kg/h.

Properties of the polymers are summarized in Table 2 below.

*Table 2: Properties of the compositions*

| | Unit | IE1 | IE2 | CE1 | CE2 |
|---|---|---|---|---|---|
| $MFR_2$ | g/10 min | 31 | 28 | 11 | 21 |
| C2 total | wt.-% | 10.5 | 11.5 | 6.9 | 19.7 |

(continued)

| | Unit | IE1 | IE2 | CE1 | CE2 |
|---|---|---|---|---|---|
| C4 total | wt.-% | 1.9 | 1.9 | 0 | 2.1 wt.-% 1-hexene |
| C2 (XI) | wt.-% | 4.3 | 4.2 | 3.1 | 11.1 |
| C4 (XI) | wt.-% | 2.2 | 2.5 | 0 | 0 |
| C2 (XS) | wt.-% | 34.8 | 39.2 | 34.5 | 78 |
| C4 (XS) | wt.-% | 0.0 | 0.0 | 0.0 | 0.0 |
| XS | wt.-% | 23 | 23 | | 12.9 |
| $T_m$ | °C | 163 | 161 | | 149 |
| $T_c$ | °C | 115 | 114 | | 102 |
| IV (XS) | dl/g | 2.8 | 3.2 | | 1.8 |
| Flexural Modulus | MPa | 821 | 971 | 1055 | 658 |
| Charpy NIS (+23°C) | kJ/m$^2$ | 10.4 | 10.7 | 6.4 | 7.3 |
| Charpy NIS (-20°C) | kJ/m$^2$ | 4.4 | 5.0 | 3.0 | 3.3 |

In both inventive examples, the impact strength (Notched Impact Strength) is much higher when compared to the comparative examples. They are also characterized by a high stiffness (Flexural Modulus) that is very superior to the stiffness of CE2. The inventive examples have a higher flowability (Melt Flow Rate) than the comparative examples.
The properties of the two inventive examples are very similar, although stiffness is improved in the absence of ethylene in fraction (A2) for Example IE2.

**Claims**

1. A heterophasic polypropylene composition comprising:

a) 55 to 90 wt.-%, based on the total weight of the heterophasic polypropylene composition, of a propylene copolymer (A) of propylene with 1-butene comonomer units in a content in the range of from 1.0 to 10.0 wt.-% and optionally with ethylene comonomer units in a content in the range of from 0 to 6.0 wt.-%, having a melt flow rate MFR$_2$ (230 °C), determined according to ISO1133, in the range of from 30 to 400 g/10 min; and
b) 10 to 45 wt.-%, based on the total weight of the heterophasic polypropylene composition, of a propylene ethylene elastomer (B) having an ethylene content in the range of from 20 to 60 wt.-%, and optionally comprising 1-butene comonomer units, and having an intrinsic viscosity IV, determined according to ISO1628-1 & 3, in the range of from 2.0 to 5.0 dl/g; and

wherein the heterophasic polypropylene composition has a melt flow rate MFR$_2$ (230 °C), determined according to ISO1133, in the range of from 10 to 100 g/10 min, and a melting temperature $T_m$, determined according to differential scanning calorimetry (DSC) described in the specification, in the range of from 150 to 167 °C, wherein the heterophasic polypropylene composition is obtained by a polymerization process using a Ziegler-Natta catalyst.

2. A heterophasic polypropylene composition comprising:

a) 55 to 90 wt.-%, based on the total weight of the heterophasic polypropylene composition and determined at 25 °C according to ISO16152, of a xylene insoluble fraction (XI) comprising a propylene copolymer (A) of propylene with 1-butene comonomer units in a content in the range of from 1.0 to 10.0 wt.-% and optionally with ethylene comonomer units in a content in the range of from 0 to 6.0 wt.-%, the xylene insoluble fraction (XI) having a melt flow rate MFR$_2$ (230 °C), determined according to ISO1133, in the range of from 30 to 400 g/10 min; and
b) 10 to 45 wt.-%, based on the total weight of the heterophasic polypropylene composition and determined at 25 °C according to ISO16152, of a xylene soluble fraction (XS) comprising a propylene ethylene elastomer (B) having an ethylene content in the range of from 20 to 60 wt.-%, and optionally comprising 1-butene comonomer units, and the xylene soluble fraction (XS) having an intrinsic viscosity IV, determined according to ISO 1628-1 & 3, in the range of from 2.0 to 5.0 dl/g; and

wherein the heterophasic polypropylene composition has a melt flow rate $MFR_2$ (230 °C), determined according to ISO1133, in the range of from 10 to 100 g/10 min, and a melting temperature $T_m$, determined according to differential scanning calorimetry (DSC) described in the specification, in the range of from 150 to 167 °C, wherein the heterophasic polypropylene composition is obtained by a polymerization process using a Ziegler-Natta catalyst.

3. The heterophasic polypropylene composition according to any one of the preceding claims, wherein the heterophasic polypropylene composition comprises a 1-butene content, determined by NMR spectroscopy, in the range of from 0.5 to 5.0 wt.-%.

4. The heterophasic polypropylene composition according to any one of the preceding claims, wherein the Ziegler-Natta catalyst comprises:

   a) compound(s) of a transition metal of Group 4 to 6 of IUPAC;
   b) a Group 2 metal compound;
   c) an internal donor, wherein said internal donor is a non-phthalic compound, preferably is a non-phthalic acid ester;
   d) a co-catalyst; and
   e) optionally an external donor.

5. The heterophasic polypropylene composition according to claim 4, wherein the internal donor is preferably selected from (di)esters of non-phthalic carboxylic (di)acids, 1,3-diethers, derivatives and mixtures thereof.

6. The heterophasic polypropylene composition according to any one of the preceding claims, wherein the heterophasic polypropylene composition is free of phthalic acid esters and their respective decomposition products.

7. The heterophasic polypropylene composition according to any one of the preceding claims, wherein the propylene copolymer (A) is a multimodal propylene copolymer.

8. The heterophasic polypropylene composition according to any one of the preceding claims, wherein the propylene copolymer (A) comprises two different propylene polymer fractions:

   a1) 25 to 75 wt.-%, based on the total weight of the propylene copolymer (A), of a first propylene polymer fraction (A1) being a propylene homopolymer or a propylene copolymer of propylene with 1-butene comonomer units and/or ethylene comonomer units; and
   a2) 75 to 25 wt.-%, based on the total weight of the propylene copolymer (A), of a second propylene polymer fraction (A2), being a propylene copolymer of propylene with 1-butene comonomer units and optionally ethylene comonomer units.

9. The heterophasic polypropylene composition according to any one of the preceding claims, wherein the heterophasic polypropylene composition has a flexural modulus, determined according to ISO178, in the range of from 700 to 1200 MPa.

10. The heterophasic polypropylene composition according to any one of the preceding claims, wherein the heterophasic polypropylene composition has an impact strength at +23 °C, determined according to ISO179/1eA, in the range of from 7.0 to 20.0 kJ/m$^2$, and/or an impact strength at -20 °C, determined according to ISO179/1eA, in the range of from 3.0 to 10.0 kJ/m$^2$.

11. The heterophasic polypropylene composition according to any one of the preceding claims, wherein the heterophasic polypropylene composition has a melting temperature $T_m$, determined according to differential scanning calorimetry (DSC) described in the specification, in the range of from 155 to 166 °C, and/or a crystallization temperature Tc, determined according to differential scanning calorimetry (DSC) described in the specification, in the range of from 105 to 135 °C.

12. A process for the preparation of a heterophasic polypropylene composition by a multi-stage polymerization process, comprising

a) preparing a first propylene polymer fraction (A1) being a propylene homopolymer or a propylene copolymer of propylene with 1-butene comonomer units and/or ethylene comonomer units in a bulk phase reactor, preferably a loop reactor, in a first polymerization stage in the presence of a Ziegler-Natta catalyst;

b) transferring the first propylene polymer fraction (A1) to a second polymerization stage, and preparing a second propylene polymer fraction (A2) being a propylene copolymer of propylene with 1-butene comonomer units and optionally ethylene comonomer units in the presence of a Ziegler-Natta catalyst in a first gas phase reactor (GPR1); and

wherein the first propylene polymer fraction (A1) and the second propylene polymer fraction (A2) together form a propylene copolymer (A) of propylene with 1-butene comonomer units in a content in the range of from 1.0 to 10.0 wt.-% and optionally ethylene comonomer units in a content in the range of from 0 to 6.0 wt.-%, having a melt flow rate $MFR_2$ (230 °C), determined according to ISO1133, in the range of from 30 to 400 g/10 min;

c) transferring the propylene copolymer (A) to a third polymerization stage and, preferably in the presence of a Ziegler-Natta catalyst, preparing a propylene ethylene elastomer (B) having an ethylene content in the range of from 20 to 60 wt.-%, and optionally comprising 1-butene comonomer units, and having an intrinsic viscosity IV in the range of from 2.0 to 5.0 dl/g, in a second gas phase reactor (GPR2); to obtain a heterophasic polypropylene composition having a melt flow rate $MFR_2$ (230 °C), determined according to ISO1133, in the range of from 10 to 100 g/10 min, and a melting temperature $T_m$, determined according to differential scanning calorimetry (DSC) described in the specification, in the range of from 150 to 167 °C.

13. The process according to claim 12, wherein the heterophasic polypropylene composition is as defined in any one of claims 1 to 11.

14. An article comprising the heterophasic polypropylene composition according to any one of claims 1 to 11, preferably being a film or a molded article.

15. Use of the heterophasic polypropylene composition according to any one of claims 1 to 11 for the manufacture of an article, preferably being a film or a molded article.

Europäisches
Patentamt

European
Patent Office

Office européen
des brevets

# EUROPEAN SEARCH REPORT

**Application Number**

EP 22 21 4927

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 915 846 A1 (BOREALIS AG [AT]) 9 September 2015 (2015-09-09) | 1-15 | INV. C08F210/06 C08L23/14 C08J5/18 B32B27/08 |
| Y | * paragraphs [0002], [0026], [0035], [0042], [0050], [0066], [0124]; claims 1-3, 5; example all * | 1-15 | |
| | ----- | | |
| X | EP 2 431 416 A1 (BOREALIS AG [AT]) 21 March 2012 (2012-03-21) | 1-15 | |
| Y | * paragraphs [0004], [0022], [0023], [0043], [0051], [0054], [0127]; claims 1, 2, 13; example all * | 1-15 | |
| | ----- | | |
| X | WO 98/59002 A1 (BOREALIS AS [DK]; PITKANEN PAIVI [FI] ET AL.) 30 December 1998 (1998-12-30) | 1-15 | |
| Y | * claims 1, 3, 6, 13; examples 9-14 * | 1-15 | |
| | ----- | | |

**TECHNICAL FIELDS SEARCHED (IPC)**

C08F
B32B
C08L

The present search report has been drawn up for all claims

| Place of search | Date of completion of the search | Examiner |
|---|---|---|
| Munich | 1 June 2023 | Bernhardt, Max |

EPO FORM 1503 03.82 (P04C01)

## ANNEX TO THE EUROPEAN SEARCH REPORT
## ON EUROPEAN PATENT APPLICATION NO.

EP 22 21 4927

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2023

| Patent document cited in search report | | | Publication date | Patent family member(s) | | | Publication date |
|---|---|---|---|---|---|---|---|
| EP 2915846 | A1 | | 09-09-2015 | BR | 112014000551 | A2 | 14-02-2017 |
| | | | | CN | 103649207 | A | 19-03-2014 |
| | | | | EP | 2731988 | A1 | 21-05-2014 |
| | | | | EP | 2915846 | A1 | 09-09-2015 |
| | | | | ES | 2552779 | T3 | 02-12-2015 |
| | | | | ES | 2603085 | T3 | 23-02-2017 |
| | | | | KR | 20140033225 | A | 17-03-2014 |
| | | | | US | 2014213719 | A1 | 31-07-2014 |
| | | | | WO | 2013010879 | A1 | 24-01-2013 |
| EP 2431416 | A1 | | 21-03-2012 | CN | 103097455 | A | 08-05-2013 |
| | | | | EP | 2431416 | A1 | 21-03-2012 |
| | | | | ES | 2398654 | T3 | 20-03-2013 |
| | | | | KR | 20130052673 | A | 22-05-2013 |
| | | | | US | 2013253125 | A1 | 26-09-2013 |
| | | | | WO | 2012034956 | A1 | 22-03-2012 |
| WO 9859002 | A1 | | 30-12-1998 | AT | 256714 | T | 15-01-2004 |
| | | | | AU | 8121198 | A | 04-01-1999 |
| | | | | BR | 9810290 | A | 19-09-2000 |
| | | | | CN | 1261390 | A | 26-07-2000 |
| | | | | DE | 69820626 | T2 | 09-06-2004 |
| | | | | EP | 0991719 | A1 | 12-04-2000 |
| | | | | ES | 2209159 | T3 | 16-06-2004 |
| | | | | JP | 4037468 | B2 | 23-01-2008 |
| | | | | JP | 2002508013 | A | 12-03-2002 |
| | | | | KR | 20010020493 | A | 15-03-2001 |
| | | | | US | 6342564 | B1 | 29-01-2002 |
| | | | | WO | 9859002 | A1 | 30-12-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3126411 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- EP 0887379 A
- EP 0517868 A
- WO 9619503 A
- WO 9632420 A
- EP 3562850 A

### Non-patent literature cited in the description

- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45 (S1), S198
- **CASTIGNOLLES, P. ; GRAF, R. ; PARKINSON, M. ; WILHELM, M. ; GABORIEAU, M.** *Polymer,* 2009, vol. 50, 2373
- **RESCONI, L. ; CAVALLO, L. ; FAIT, A. ; PIEMONTESI, F.** *Chem. Rev.,* 2000, vol. 100, 1253
- **J. RANDALL.** *Macromol. Sci., Rev. Macromol. Chem. Phys.,* 1989, vol. C29, 201
- **A.J. BRANDOLINI ; D.D. HILLS.** NMR spectra of polymers and polymer additives. Marcel Deker Inc, 2000
- **L. ABIS.** *Mackromol. Chem.,* 1986, vol. 187, 1877-1886